# EUROPÄISCHE PATENTSCHRIFT

(11) **EP 1 230 066 B1**
(45) Veröffentlichungstag und Bekanntmachung des Hinweises auf die Patenterteilung: **17.12.2003**
(21) Anmeldenummer: 00969322.7
(22) Anmeldetag: 28.09.2000
(51) Int. Cl.: B23P 19/08, B25B 27/00, F16J 15/32

(54) **MONTAGEWERKZEUG**
ASSEMBLY TOOL
OUTIL DE MONTAGE

(30) Priorität: 05.11.1999 DE 19953475
(43) Veröffentlichungstag der Anmeldung: 14.08.2002
(73) Patentinhaber: Alfa Laval LKM A/S, 6000 Kolding (DK)
(72) Erfinder: HERING, Martin, Pleasant Prairie, Wl 53158 (US); JENSEN, Karl, Aage, Lindholm, DK-5220 Odense (DK)
(74) Vertreter: Vonnemann, Gerhard, Dr.-Ing.
(86) Internationale Anmeldenummer: EP0009471
(87) Internationale Veröffentlichungsnummer: WO01032353

(56) Entgegenhaltungen:
- EP-A- 0 498 929
- WO-A-99/07513
- GB-A- 1 025 704
- GB-A- 1 127 172
- US-A- 4 550 486
- US-A- 5 956 830

## Beschreibung

Die Erfindung betrifft ein Montagewerkzeug für die Montage eines Dichtringes in einer Ringnut eines Maschinenteils, insbsondere Ventiltellers, bei dem eine außen liegende Ringnut auf einem radial nach außen ragenden Dichtungsabschnitt angeordnet ist, wobei das Montagewerkzeug eine pneumatische Kolben-Zylinder-Einheit zum gleichmäßigen Einpressen des Dichtringes in die Ringnut umfaßt.

Es sind bereits Montagewerkzeuge bekannt, bei denen die Dichtung mittels einer hydraulischen Presse in die Dichtnut eingepreßt wird. Solche hydraulischen Pressen sind aufwendig und teuer in der Herstellung. Ausserdem sind sie groß und schwer und daher nicht leicht zu transportieren. Deshalb wird vom Anwender meist nur ein einziges Gerät angeschafft und an zentraler Stelle in einem Werkstatt- und Wartungsraum installiert. Dies wiederum erfordert, daß die einzelnen Maschinenteile, beispielsweise Ventilteller, für die Erneuerung der Dichtungen in den zentralen Wartungsraum gebracht werden, um dort die neuen Dichtringe einzusetzen.

Aus der US 4,550,486 ist ein Handwerkzeug bekannt, das zur Montage eines Dichtrings in einer Gerätebohrung bestimmt und so beschaffen ist, dass der zwei verschiedene Axialseiten aufweisende Dichtring nur mit der richtige Orientierung montiert werden kann. Das Handwerkzeug weist einen in einem Zylinder axial verschiebbaren Kolben auf, der unter Federspannung , steht. Zur Montage wird der Dichtring zuerst von Hand in axilaler Richtung auf den Kolben geschoben. Bei falscher Orientierung entstehen dabei so hohe Axialkräfte, dass der Kolben entgegen der Federspannung in den Zylinder zurückweicht, so dass das Aufschieben misslingt. Bei korrekter Orientierung des Dichtrings befindet sich dieser jetzt auf dem Kolben und in Anlage an einem radialen Vorsprung des Zylinders. Das Handwerkzeug wird nun mittels eines Handgriffs an das mit dem Dichtring zu bestückende Gerät gedrückt, wobei ein zentraler Bolzen des Handwerkzeugs in eine Zentrieröffnung des Geräts eingeführt wird. Beim weiteren Andrücken schiebt der radiale Vorsprung des nun zentrierten Zylinders den Dichtring axial in die Geräteöffnung hinein, womit die Montage beendet wird. Das bekannte Montagewerkzeug eignet sich allerdings nicht für die Montage von Dichtingen, die zumindest teilweise radial nach innen in eine äußere Ringnut des zu bestückenden Geräts eingedrückt und dabei auf spezielle Art verformt werden müssen.

Dasselbe gilt für auch für die aus der WO 99/07513 und der US 5,956,830 bekannten Montagewerkzeuge. Beide sind zwar auch für die automatische Dichtringmontage geeignet und gegebenenfalls mit einer pneumatischen Kolben-Zylinder-Einheit ausrüstbar, jedoch können die Dichtringe lediglich in axialer Richtung in entsprechend ausgestaltete Ringnuten eingepresst werden. Beispielsweise können radial außen gelegene Ringnuten an Ventiltellern mit den bekannten Werkzeugen nicht bestückt werden.

Aufgabe der Erfindung ist es, ein Montagewerkzeug der oben genannten Art anzugeben, das für die Montage von Dichtringen in eine außenliegende Ringnut eines radial nach außen ragenden Geräteteils geeignet ist.

Diese Aufgabe wird erfindungsgemäß dadurch gelöst, daß die pneumatische Kolben-Zylinder-Einheit einen Arbeitskolben mit einem axial vorspringenden, ringförmigen Montageabschnitt aufweist, der durch Beaufschlagung der Kolben-Zylinder-Einheit mit Preßluft einen Dichtring gleichmäßig in die Ringnut hineinpreßt, daß der Arbeitskolben des Montagewerkzeugs an einer Axialseite des Dichtungsabschnittes des Maschinenteils oder an dem Dichtring axial abstützbar ist, und daß das Montagewerkzeug zumindest ein Flanschteil mit einem an der anderen Axialseite des Dichtungsabschnittes oder am Dichtring axial abstützbaren Stützabschnitt und einem Flanschabschnitt aufweist, der zur Dichtungsmontage mit einem entsprechenden Flanschabschnitt des Zylinderteiles fest verbindbar ist.

Die erfindungsgemäße pneumatische Kolben-Zylinder-Einheit nimmt dem Monteur die anstrengende Arbeit ab und vermindert die Verletzungsgefahr. Durch das gleichmässige Einpressen des Dichtringes können einerseits Beschädigungen vermieden und andererseits ein korrekter Sitz des eingepressten Dichtringes gewährleistet werden. Das erfindungsgemäße Montagewerkzeug braucht nicht an zentraler Stelle stationiert zu sein, denn im Gegensatz zu bekannten, hydraulisch angetriebenen Werkzeugen kann ein pneumatischer Antrieb an die in Werkhallen ohnehin vorhandenen Preßluftversorgungsleitungen vor Ort angeschlossen werden. Das Montagewerkzeug kann daher einfach aufgebaut sein, was die Herstellungskosten und die Wartungskosten vermindert und die Zuverlässigkeit im harten Alltagseinsatz verbessert. Weiterhin ist das erfindungsgemäße Montagewerkzeug leicht und bequem zu transportieren. Die Anordnung von Flanschteil und Stützabschnitt erlaubt eine sichere und feste Positionierung des Montagewerkzeuges am Maschinenteil, wodurch die korrekte Montage des Dichtringes ohne Beschädigung desselben gewährleistet wird.

In vorteilhafter Ausgestaltung der Erfindung ist vorgesehen, daß der ringförmige Montageabschnitt des Arbeitskolbens an der radial inneren Seite seines freien Endes mit einer umlaufenden Ausnehmung zur Führung des Dichtringes versehen ist, wobei die Flanken der Ausnehmung derart abgeschrägt sind, daß sie bei einer Axialverschiebung des Arbeitskolbens den Dichtring einerseits zusammenpressen und andererseits in die Ringnut hineindrücken.

Zur lösbaren Verbindung der genannten Flanschabschnitte von Zylinderteil und Flanschteil ist vorzugsweise eine Klemme, insbesondere eine Profilschellenverbindung vorgesehen, die einfach montierbar und nach Gebrauch ebenso leicht demontierbar ist.

In vorteilhafter Ausgestaltung der Erfindung ist vorgesehen, daß der jeweilige Flanschabschnitt von Zylinderteil und Flanschteil in Form eines zur Verbindung von Ventilen und Rohren bekannten Standardflanschs und die Klemme in Form einer zugehörigen bekannten Standardklemme ausgebildet ist. Bei dieser Ausgestaltungsform können mit Vorteil einfach zu beschaffende Standardteile, insbesondere die Standardklemme verwendet werden. Dabei ist nicht nur die Beschaffung der Teile kostengünstiger. Von Vorteil ist auch, daß der Benutzer des Montagewerkzeuges zumeist an die Handhabung der Standardflansche und der Standardklemme gewöhnt ist. Dadurch kann die Handhabung von Anfang an schnell und fehlerfrei geschehen.

In einer vorteilhaften Ausführungsform ist das Flanschteil um eine radial innere Ausnehmung herum ringförmig ausgebildet. Dies erlaubt die Anwendung bei Maschinenteilen wie beispielsweise Ventiltellern, die mit axial sich erstreckenden Betätigungsstangen oder dergleichen fest verbunden sind. An solchen Maschinenteilen kann das ringförmige Flanschteil derart montiert werden, daß die axial vorspringenden Betätigungsstangen durch seine radial innere Ausnehmung hindurchragen.

Aus demselben Grund kann auch eine Ausgestaltungsform vorteilhaft sein, bei der das Zylinderteil und der Arbeitskolben um eine radial innere Ausnehmung herum ringförmig ausgebildet sind.

Eine andere Ausführungsform sieht vor, daß das Zylinderteil und der Arbeitskolben topfförmig ausgebildet sind. Diese Ausgestaltungsform ist einfacher in der Herstellung, kommt aber nur für solche Maschinenteile infrage, die auf der Axialseite, auf der die Kolben-Zylinder-Einheit zu montieren ist, keinen wesentlichen axialen Vorsprung aufweisen. Dies ist beispielsweise bei flachen Ventiltellern der Fall, die lediglich auf der anderen Axialseite mit einer Betätigungsstange verbunden sind.

In einem vorteilhaften Verfahren zur Montage eines Dichtringes in einer aussen liegenden Ringnut eines Maschinenteils, insbesondere Ventiltellers, unter Verwendung eines Montagewerkzeuges der vorbeschriebenen Art sind die folgenden Verfahrensschritte vorgesehen:

Der Dichtring wird am Maschinenteil per Hand vormontiert, so daß er aussen an der Ringnut anliegt;
eine pneumatische Kolben-Zylinder-Einheit wird auf der einen Axialseite des Maschinenteils an dieses oder an den Dichtring angelegt und festgehalten;
ein Flanschteil wird auf der anderen Axialseite des Maschinenteils an dieses oder an den Dichtring angelegt und mittels einer Klemme mit der Kolben-Zylinder-Einheit fest verbunden;
die Kolben-Zylinder-Einheit wird mit Preßluft beaufschlagt, so daß der Arbeitskolben mit seinem axial vorspringenden, ringförmigen Montageabschnitt den Dichtring gleichmäßig in die Ringnut einpreßt;
das Montagewerkzeug wird vom Maschinenteil abgenommen, vorzugsweisc nach einer Druckentlastung der Kolben-Zylinder-Einheit und nach Lösen der Klemme.

Ausführungsbeispiele der Erfindung werden nachfolgend anhand der Zeichnung näher erläutert. Es zeigen:
- Fig. 1: eine geschnittene Darstellung eines Schließelementes für ein Ventil, mit einem vormontierten Dichtring;
- Fig. 2: das Schließelement von Figur 1 mit daran befestigtem Montagewerkzeug in einer ersten Ausführungsform, vor dem Einpressen des Dichtringes;
- Fig. 3: wie Figur 2, jedoch nach dem Einpressen des Dichtringes;
- Fig. 4: eine Figur 1 entsprechende Darstellung eines Ventiltellers;
- Fig. 5: der Ventilteller von Figur 4 mit daran befestigtem Montagewerkzeug in einer zweiten Ausführungsform, vor dem Einpressen des Dichtringes;
- Fig. 6: wie Figur 5, jedoch nach dem Einpressen des Dichtringes.

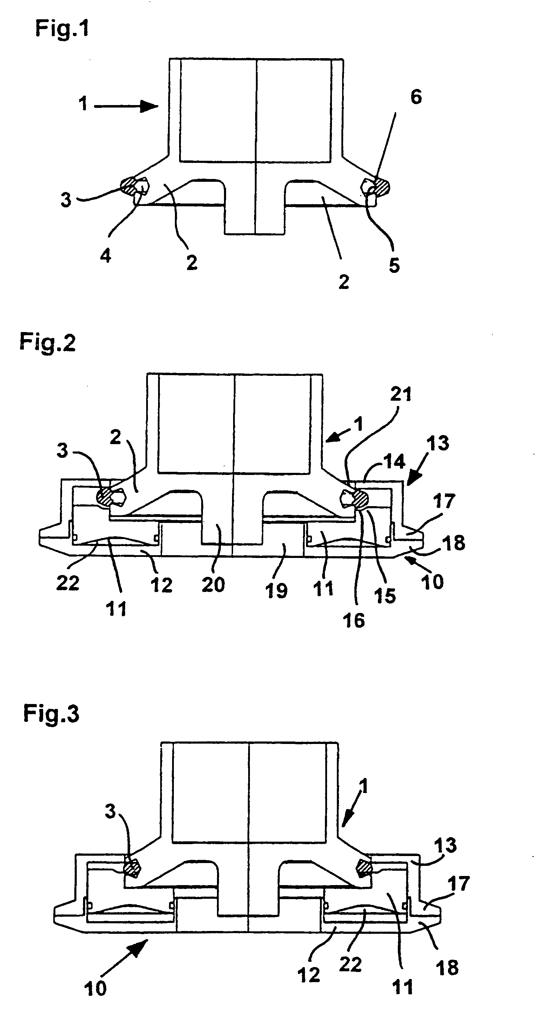

In Figur 1 erkennt man ein Schließelement 1 eines weiter nicht dargestellten Doppelsitzventils, wie es in der Lebensmittelindustrie zur Handhabung, beispielsweise zum Abfüllen, pastöser Lebensmittel Verwendung findet. Das Schließelement 1 besitzt einen umlaufenden, schräg radial nach aussen ragenden Dichtungsabschnitt 2, der mit einer radial nach aussen offenen Ringnut 4 versehen ist.

Ein hier verwendeter Dichtring 3 unterscheidet sich von einfachen O-Ring-Dichtungen durch zwei umlaufende Vorsprünge 6, die parallel zueinander derart angeordnet sind, daß sie zwischen sich eine im Querschnitt V-förmige Ausnehmung 5 einschliessen.

In Figur 2 erkennt man ein am Schließelement 1. befestigtes Montagewerkzeug 10. Dieses besteht aus einem ringförmigen Arbeitskolben 11, der axial verschiebbar in einem ebenfalls ringförmigen Zylinderteil 12 angeordnet ist, und einem Flanschteil 13, wobei der Dichtring 3 zwischen einem Stützabschnitt 14 des Flanschteils 13 und einem axial vorspringenden, ringförmigen Montageabschnitt 15 des Arbeitskolbens 11 eingeklemmt wird. Zur besseren Führung während der Montage besitzt der Montageabschnitt 15 des Arbeitskolbens 11 an der radial inneren Seite eine umlaufende Ausnehmung 16.

Das Flanschteil 13 besitzt einen radial nach aussen abstehenden Flanschabschnitt 17, der mit einem entsprechenden Flanschabschnitt 18 des Zylinderteils 12 fest verbindbar ist. Die Flanschabschnitte 17, 18 sind in Form von bekannten Standardflanschen ausgestaltet und werden mit einer nicht gezeigten Standardklemme zusammengehalten.

In einer inneren Ausnehmung 19 des Zylinderteiles 12 findet ein axial vorspringender Abschnitt 20 des Schließelementes 1 Platz, dessen Dichtungsabschnitt 2 innerhalb einer radial inneren Ausnehmung 21 des Flanschteils 13 angeordnet ist.

Figur 2 zeigt die Situation nach der Positionierung des Montagewerkzeuges 10 am Schließelement 1. Zur Montage des Dichtringes 3 wird nun der Innenraum 22 der Kolben-Zylinder-Einheit 11, 12 mit Preßluft beaufschlagt, wobei der Dichtring 3 zwischen dem Montageabschnitt 15 des Arbeitskolbens 11 und dem Stützabschnitt 14 des Flanschteils 13 zunächst axial zusammengepresst und schließlich radial in die Ringnut 4 hineingepresst wird. Diese Situation ist in Figur 3 dargestellt. Die Ringnut 4 erweitert sich radial nach innen in axialer Richtung, so daß sich der Dichtring 3 im Inneren der Ringnut 4 elastisch ausdehnen kann und somit in der Ringnut 4 fest verankert wird.

Nach dem Lösen einer nicht gezeigten Standardklemme, die während des Einpreßvorganges die beiden Standardflansche 17, 18 fest miteinander verbunden hat, kann die Kolben-Zylinder-Einheit 11, 12 einerseits und das Flanschteil 13 andererseits vom Schließelement 1 entfernt werden. Damit ist die Montage des Dichtringes 3 beendet.

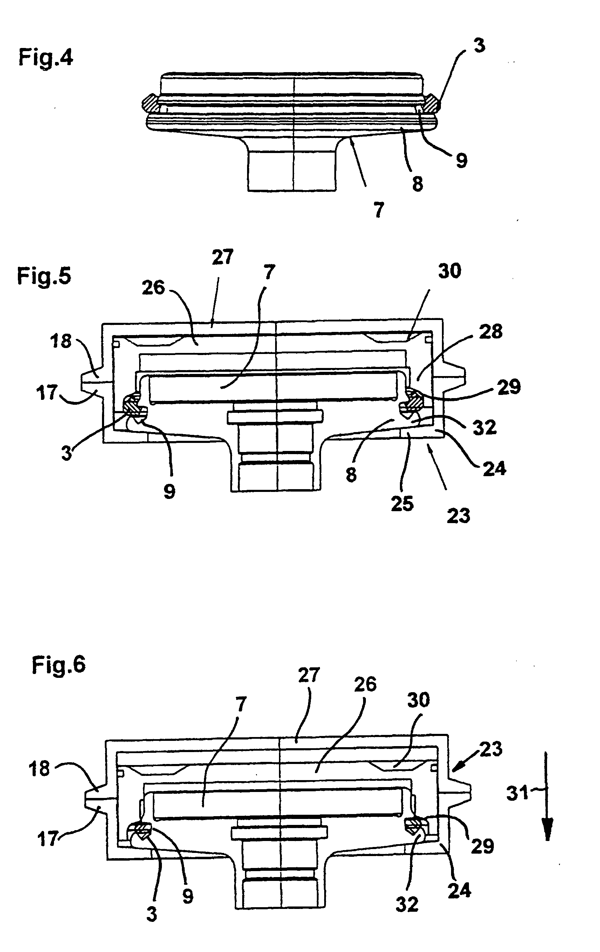

Figur 4 zeigt ein als Ventilteller 7 ausgestaltetes Ventilschließelement, bei dem ein radial nach aussen ragender Dichtungsabschnitt 8 mit einer unsymmetrischen Ringnut 9 versehen ist.

Figur 5 zeigt ein modifiziertes Montagewerkzeug 23, welches ebenfalls eine Kolben-Zylinder-Einheit und ein Flanschteil 24 umfaßt. Das Flanschteil 24 besitzt wiederum einen Stützabschnittt 25, der an der einen Axialseite des Dichtungsabschnittes 8 des Ventiltellers 7 anliegt. Die Kolben-Zylinder-Einheit besteht aus einem im wesentlichen topfförmigen Arbeitskolben 26, der axial verschiebbar in einem ebenfalls topfförmigen Zylinderteil 27 angeordnet ist. Der Arbeitskolben 26 besitzt ausserdem einen axial vorspringenden, ringförmigen Montageabschnitt 28, der an seiner radial inneren Seite eine umlaufende Ausnehmung 29 zur Führung des Dichtringes 3 aufweist.

Figur 5 zeigt die Situation nach der Positonierung des Montagewerkzeuges 23 am Ventilteller 7. Zur Montage des Dichtringes 3 wird nun der Innenraum 30 der Kolben-Zylinder-Einheit 26, 27 mit Preßluft beaufschlagt, infolgedessen sich der Arbeitskolben 26, wie in Figur 6 gezeigt, in Pfeilrichtung 31 bewegt. Dabei wird der Dichtring 3 zwischen der Ausnehmung 29 des Arbeitskolbens 26 und einer radial weit vorstehenden Nutwand 32 des am Ventilteller 7 ausgebildeten Dichtungsabschnittes 8 zusammengepresst und schräg nach unten sowie radial nach innen in die Ringnut 9 hineingedrückt.

Nach dem Lösen einer nicht gezeigten Standardklemme, die während des Einpreßvorganges die beiden Standardflansche 17, 18 fest miteinander verbunden hat, kann die Kolben-Zylinder-Einheit 26, 27 einerseits und das Flanschteil 24 andererseits vom Ventilteller 7 entfernt werden. Damit ist die Montage des Dichtringes 3 beendet.

### Bezugszeichenliste

- 1.: Schließelement
- 2.: Dichtungsabschnitt
- 3.: Dichtring
- 4.: Ringnut
- 5.: Ausnehmung
- 6.: Vorsprung
- 7.: Ventilteller
- 8.: Dichtungsabschnitt
- 9.: Ringnut
- 10.: Montagewerkzeug
- 11.: Arbeitskolben
- 12.: Zylinderteil
- 13.: Flanschteil
- 14.: Stützabschnitt
- 15.: Montageabschnitt
- 16.: Ausnehmung
- 17.: Flanschabschnitt
- 18.: Flanschabschnitt
- 19.: Ausnehmung
- 20.: Abschnitt
- 21.: Ausnehmung
- 22.: Innenraum
- 23.: Montagewerkzeug
- 24.: Flanschteil
- 25.: Stützabschnitt
- 26.: Arbeitskolben
- 27.: Zylinderteil
- 28.: Montageabschnitt
- 29.: Ausnehmung
- 30.: Innenraum
- 31.: Pfeilrichtung
- 32.: Nutwand

## Patentansprüche

1. Montagewerkzeug für die Montage eines Dichtringes (3) in einer Ringnut (4, 9) eines Maschinenteiles (1, 7), insbesondere Ventiltellers (7), bei dem eine außen liegende Ringnut (3) auf einem radial nach außen ragenden Dichtungsabschnitt (2, 8) angeordnet ist, wobei das Montagewerkzeug (10, 23) eine pneumatische Kolben-Zylinder-Einheit (11, 12, 26, 27) zum gleichmäßigen Einpressen des Dichtringes (3) in die Ringnut (4, 9) umfaßt, **dadurch gekennzeichnet, daß** die pneumatische Kolben-Zylinder-Einheit einen Arbeitskolben (11, 26) mit einem axial vorspringenden, ringförmigen Montageabschnitt (15, 28) aufweist, der durch Beaufschlagung der Kolben-Zylinder-Einheit mit Preßluft einen Dichtring (3) gleichmäßig in die Ringnut (4, 9) hineinpreßt, daß der Arbeitskolben (11, 26) des Montagewerkzeugs (10, 23) an einer Axialseite des Dichtungsabschnittes (2) des Maschinenteils (1) oder an dem Dichtring (3) axial abstützbar ist, und daß das Montagewerkzeug (10, 23) zumindest ein Flanschteil (13, 24) mit einem an der anderen Axialseite des Dichtungsabschnittes (8) oder am Dichtring (3) axial abstützbaren Stützabschnitt (14, 25) und einem Flanschabschnitt (17) aufweist, der zur Dichtungsmontage mit einem entsprechenden Flanschabschnitt (18) des Zylinderteiles (12, 27) fest verbindbar ist.

2. Montagewerkzeug nach Anspruch 1, **dadurch gekennzeichnet, daß** der ringförmige Montageabschnitt (15, 28) des Arbeitskolbens (11, 26) an der radial inneren Seite seines freien Endes mit einer umlaufenden Ausnehmung (16, 29) zur Führung des Dichtringes (3) versehen ist, wobei die Flanken der Ausnehmung (16, 29) derart abgeschrägt sind, daß sie bei einer Axialverschiebung des Arbeitskolbens (11, 26) den Dichtring (3) einerseits zusammenpressen und andererseits in die Ringnut (4, 9) hineindrücken.

3. Montagewerkzeug nach Anspruch 1 oder 2, **dadurch gekennzeichnet, daß** eine Klemme zur lösbaren Verbindung der Flanschabschnitte (17, 18) von Zylinderteil (12, 27) und Flanschteil (13, 24) vorgesehen ist.

4. Montagewerkzeug nach Anspruch 3, **dadurch gekennzeichnet, daß** der jeweilige Flanschabschnitt (17, 18) von Zylinderteil (12, 27) und Flanschteil (13, 24) in Form eines zur Verbindung von Ventilen und Rohren bekannten Standardflanschs und die Klemme in Form einer zugehörigen bekannten Standardklemme ausgebildet ist.

5. Montagewerkzeug nach einem der vorhergehenden Ansprüche, **dadurch gekennzeichnet, daß** das Flanschteil (13, 24) um eine radial innere Ausnehmung (21) herum ringförmig ausgebildet ist.

6. Montagewerkzeug nach einem der vorhergehenden Ansprüche, **dadurch gekennzeichnet, daß** das Zylinderteil (12) und der Arbeitskolben (11) um eine innere Ausnehmung (19) herum ringförmig ausgebildet sind.

7. Montagewerkzeug nach einem der Ansprüche 1 bis 5, **dadurch gekennzeichnet, daß** das Zylinderteil (27) und der Arbeitskolben (26) topfförmig ausgebildet sind.

8. Verfahren zur Montage eines Dichtringes (3) in einer aussen liegenden Ringnut (4, 9) eines Maschinenteils (1, 7), insbesondere Ventiltellers (7), unter Verwendung eines Montagewerkzeuges (10, 23) nach einem der vorhergehenden Ansprüche, **gekennzeichnet durch** die folgenden Verfahrensschritte:
- der Dichtring (3) wird am Maschinenteil (1, 7) per Hand vormontiert, so daß er aussen an der Ringnut (4, 9) anliegt;
- eine pneumatische Kolben-Zylinder-Einheit (11, 12, 26, 27) wird auf der einen Axialseite des Maschinenteils (1, 7) an dieses oder an den Dichtring (3) angelegt und festgehalten;
- ein Flanschteil (13, 24) wird auf der anderen Axialseite des Maschinenteils (1, 7) an dieses oder an den Dichtring (3) angelegt und mittels einer Klemme mit der Kolben-Zylinder-Einheit (11, 12, 26, 27) fest verbunden;
- die Kolben-Zylinder-Einheit (11, 12, 26, 27) wird mit Preßluft beaufschlagt, so daß der Arbeitskolben (11, 26) mit seinem axial vorspringenden, ringförmigen Montageabschnitt (15, 28) den Dichtring (3) gleichmäßig in die Ringnut (4, 9) einpreßt;
- das Montagewerkzeug (11, 23) wird vom Maschinenteil (1, 7) abgenommen, vorzugsweise nach einer Druckentlastung der Kolben-Zylinder-Einheit (11, 12, 26, 27) und nach Lösen der Klemme.

## Claims

1. An assembly tool for the assembly of a sealing ring (3) in an annular groove (4, 9) of a machine part (1, 7), in particular of a valve disk (7), with which an outer lying annular groove (3) is arranged on an radially outwardly protruding sealing section (2, 8), wherein the assembly tool (10, 23) comprises a pneumatic piston-cylinder unit (11, 12, 26, 27) for the uniform pressing of the sealing ring (3) into the annular groove (4, 9), **characterised in that** the pneumatic piston-cylinder unit comprises an operating piston (11, 26) with an axially projecting, annular assembly section (15, 28) which by way of impingement of the piston-cylinder unit with pressurised air presses a sealing ring (3) uniformly into the annular groove (4, 9), that the operating piston (11, 26) of the assembly tool (10, 23) is axially supportable on an axial side of the sealing section (2) of the machine part (1) or on the sealing ring (3), and that the assembly tool (10, 23) comprises at least one flange part (13, 24) with a support section (14, 25) axially supportable on the other axial side of the sealing section (8) or on the sealing ring (3) and with a flange section (17) which for the sealing assembly may be firmly connected to a corresponding flange section (18) of the cylinder part ( 12, 27).

2. An assembly tool according to claim 1, **characterised in that** the annular assembly section (15, 28) of the operating piston (11, 26) on the radial inner side of its free end is provided with a circumferential recess (16, 29) for guiding the sealing ring (3), wherein the flanks of the recess (16, 29) are chamfered in a manner such that with an axial displacement of the operating piston (11, 26), on the one hand they press the sealing ring together and on the other hand press it into the annular groove (4, 9).

3. An assembly tool according to claim 1 or 2, **characterised in that** there is provided a clamp for the releasable connection of the flange sections (17, 18) of the cylinder part (12, 27) and the flange part (13, 24).

4. An assembly tool according to claim 3, **characterised in that** the respective flange section (17, 18) of the cylinder part (12, 27) and of the flange part (13, 24) is designed in the form of standard flanges known for connecting valves and tubes, and the clamp is designed in the form of an associated known standard clamp.

5. An assembly tool according to one of the preceding claims, **characterised in that** the flange part ( 13, 24) is designed annular around a radially inner recess (21).

6. An assembly tool according to one of the preceding claims, **characterised in that** the cylinder part (12) and the operating piston (11) are formed annular around an inner recess (19).

7. An assembly tool according to one of the claims 1 to 5, **characterised in that** the cylinder part (27) and the operating piston (26) are designed pot-shaped.

8. A method for assembly of a sealing ring (3) in an outer lying annular groove (4, 9) of a machine part (1, 7), in particular a valve disk (7), using an assembly tool (10, 23) according to one of the preceding claims, **characterised by** the following method steps:
- the sealing ring (3) is preassembled on the machine part (1, 7) by hand such that on the outside it bears on the annular groove (4, 9);
- a pneumatic piston-cylinder unit (11, 12, 26, 27) on the one axial side of the machine part (1, 7) is applied against this or against the sealing ring (3) and firmly held;
- a flange part (13, 24) on the other axial side of the machine part (1, 7) is applied against this or against the sealing ring (3) and by way of a clamp is firmly connected to the piston-cylinder unit (11, 12, 26, 27);
- the piston-cylinder unit (11, 12, 26, 27) is impinged with pressurised air so that the operating piston (11, 26) with its axially projecting, annular assembly section (15, 28) uniformly presses the sealing ring (3) into the annular groove (4, 9);
- the assembly tool (11, 23) is removed from the machine part (1, 7) preferably after a pressure relief of the piston-cylinder unit (11, 12, 26, 27) and after release of the clamp.

## Revendications

1. Outil de montage pour monter un joint d'étanchéité (3) dans une rainure annulaire (4, 9) d'une pièce de machine (1, 7), notamment d'un plateau de soupape (7), selon lequel une rainure annulaire 3) située à l'extérieur se trouve dans un segment pour joint (2, 8) venant radialement en saillie,
l'outil de montage (10, 23) comportant un vérin pneumatique (11, 12, 26, 27) pour enfoncer régulièrement le joint (3) dans la rainure annulaire (4, 9),
**caractérisé en ce que**
le vérin pneumatique comporte un piston (11, 26) avec un segment de montage (15, 28) annulaire, venant axialement en saillie, et qui enfonce régulièrement le joint d'étanchéité (3) dans la rainure annulaire (4, 9) par l'alimentation en air comprimé du vérin,
le piston (11, 26) de l'outil de montage (10, 23) s'appuie axialement contre un côté axial du segment de joint (2) de la pièce de machine (1) ou du joint annulaire (3), et
l'outil de montage (10, 23) comporte au moins une bride (13, 24) avec un segment d'appui ( 14, 25) appuyé axialement contre l'autre côté axial du segment de joint d'étanchéité (8) ou du joint d'étanchéité (3) et un segment de bride ( 17) qui peut être relié solidairement à un segment de bride (18) de la partie de cylindre (12, 27) pour le montage du joint.

2. Outil de montage selon la revendication 1,
**caractérisé en ce que**
le segment de montage annulaire ( 15, 28) du piston ( 11, 26) présente au niveau de son côté radial intérieur, une extrémité libre avec une cavité périphérique (16, 29) pour guider le joint d'étanchéité (3), les flancs de la cavité (16, 29) étant inclinés pour que lors du coulissement axial du piston (11, 26), ils compriment d'un côté le joint d'étanchéité (3) et de l'autre ils l'enfoncent dans la rainure annulaire (4, 9).

3. Outil de montage selon la revendication 1 ou 2,
**caractérisé par**
une pince pour relier de manière amovible les segments de bride (17, 18) de la partie de cylindre (12, 27) et de la partie de bride ( 13, 24).

4. Outil de montage selon la revendication 3,
**caractérisé en ce que**
le segment de bride respectif (17, 18) de la partie de cylindre (12, 27) et de la partie de bride (13, 24) est réalisé sous la forme d'une bride habituelle connue pour relier des soupapes et des tuyaux, et la pince se présente sous la forme d'une pince habituelle, connue.

5. Outil de montage selon l'une des revendications précédentes,
**caractérisé en ce que**
la partie de bride (13, 24) est de forme annulaire entourant une cavité radiale intérieure (21).

6. Outil de montage selon l'une des revendications précédentes,
**caractérisé en ce que**
la partie de cylindre (12) et le piston (11) sont réalisés avec une forme annulaire autour de la cavité intérieure (19).

7. Outil de montage selon l'une des revendications 1 à 5,
**caractérisé en ce que**
la partie de cylindre (27) et le piston de travail (26) sont en forme de pot.

8. Procédé de montage d'un joint d'étanchéité (3) dans une rainure annulaire (4, 9) extérieure d'une pièce de machine (1, 7), notamment d'un plateau de soupape (7) en utilisant un outil de montage (10, 23) selon l'une des revendications précédentes,
**caractérisé par** les étapes suivantes :
- on effectue un préassemblage manuel du joint d'étanchéité (3) sur la partie de machine (1, 7) pour être appliqué de l'extérieur contre la rainure annulaire (4, 9),
- on applique un vérin pneumatique (11, 12, 26, 27) sur un côté axial. de la partie de machine (1, 7) ou contre le joint d'étanchéité (3) et on maintient cette unité fermement,
- on applique une partie de bride (13, 24) par l'autre côté axial de la machine (1, 7) contre cette partie ou contre le joint d'étanchéité (3) et à l'aide d'une pince on relie l'unité piston/vérin (11, 12, 26, 27) solidairement,
- on alimente en air comprimé le vérin (11, 12, 26, 27) pour que le piston (11, 26) soit pressé sur tout son segment de montage, annulaire, venant axialement en saillie (15, 28) pour enfoncer le joint d'étanchéité (3), régulièrement dans la rainure annulaire (4, 9),
- on enlève l'outil de montage ( 11, 23) de la partie de machine (1, 7), de préférence après avoir coupé la pression du vérin ( 11, 12, 26, 27) et après avoir enlevé la pince.
